Europäisches Patentamt

European Patent Office

Office européen des brevets

(19)

(11)   EP 0 590 172 B1

(12)         EUROPÄISCHE PATENTSCHRIFT

(45) Veröffentlichungstag und Bekanntmachung des
     Hinweises auf die Patenterteilung:
     **23.07.1997 Patentblatt 1997/30**

(51) Int. Cl.$^6$: **A23P 1/16**, A23L 1/317,
     A23L 1/315, A23L 1/325

(21) Anmeldenummer: 92116519.7

(22) Anmeldetag: **28.09.1992**

(54) **Gekühlte, pasteurisierte, streichfähige Fleisch- oder Fischmousse sowie Verfahren zu ihrer Herstellung**

Refrigerated, pasteurized and spreadable meat or fish mousse and process of manufacturing the same

Mousse de viande ou de poisson réfrigérée, pasteurisée et tartinable, et son procédé de fabrication

(84) Benannte Vertragsstaaten:
     **AT BE CH DE DK ES FR GB GR IE IT LI LU NL PT SE**

(43) Veröffentlichungstag der Anmeldung:
     **06.04.1994 Patentblatt 1994/14**

(73) Patentinhaber: **SOCIETE DES PRODUITS NESTLE S.A.**
     **1800 Vevey (CH)**

(72) Erfinder:
     • **Hubert, Reinl**
       **W-8261 Tuessling (DE)**
     • **Klaus, Stefan**
       **W-7703 Rielasingen-Worblingen 2 (DE)**
     • **Pecher, Anita**
       **W-8261 Kastl (DE)**

(74) Vertreter: **Thomas, Alain et al**
     **55, avenue Nestlé**
     **1800 Vevey (CH)**

(56) Entgegenhaltungen:
     **EP-A- 0 331 936          EP-A- 0 404 214**
     **DE-A- 3 446 829          GB-A- 2 141 917**

     • **PATENT ABSTRACTS OF JAPAN vol. 14, no. 526 (C-779)(4469) 19. November 1990 & JP-A-22 19 562 (PRIMA MEAT PACKERS LTD) 3. September 1990**
     • **PATENT ABSTRACTS OF JAPAN vol. 14, no. 232 (C-719)(4175) 17. Mai 1990 & JP-A-25 7 163 (SHIYOUBEE K.K.) 26. Februar 1990**

Bemerkungen:
     Die Akte enthält technische Angaben, die nach dem Eingang der Anmeldung eingereicht wurden und die nicht in dieser Patentschrift enthalten sind.

**Beschreibung**

Die Erfindung betrifft ein gekühltes pasteurisiertes streichfähiges Mousse sowie ein Verfahren zu seiner Herstellung.

Es ist bekannt Dessertmousse herzustellen. Diese neutralen Mousse sind aber sterilisiert und nicht mittels weiterer internen Faktoren stabilisiert. Wenn man Fleischmousse herstellt und sterilisiert, besteht das Problem, das beim Verzehr des erhaltenen Produktes ein sandiges Gefühl auftritt. Das ist z.B. der Fall für GB Patent 2141917. Dieser organoleptische Nachteil ist für den Konsumenten absolut nicht akzeptabel. Die DE-OS 3446829 betrifft ein Verfahren zur Herstellung von Würsten, wobei ein inertes Gas in der Wurstmasse vermischt wird und dann diese Masse abgefüllt und pasteurisiert wird; da die Pasteurisierung nach der Gaszugabe stattfindet, ist aber die einbringbare Gasmenge beschränkt.

Der Erfindung liegt die Aufgabe zugrunde, ein organoleptisches akzeptables Fleischmousse zur Verfügung zu stellen, das zusätzlich streichfähig ist. Da das erfindungsgemässe Mousse nur pasteurisiert ist, bedingt sie gewisse Merkmale was die Zusammensetzung und die Verfahrensbedingungen betrifft, erlaubt aber die Gasmenge in der Masse zu erhöhen.

Die Erfindung betrifft ein gekühltes, pasteurisiertes, steichfähiges Mousse, das einen PH-Wert zwischen 5 und 6, einen aw-Wert zwischen 0,960 und 0,980 und einen TS-Wert zwischen 35 und 50% aufweist und das - auf Volumen bezogen - zwischen 20 und 43% Stickstoff oder Luft enthält.

Das Mousse hat vorzugsweise einen PH-Wert zwischen 5,4 und 5,7 und einen TS-Wert zwischen 40 und 45%. Das Mousse ist vorzugsweise mit Stickstoff aufgeschäumt. Unter Mousse versteht man sowohl ein Fisch- als auch ein Fleischmousse. Unter Fisch versteht man Fisch an sich selbst oder Schalentiere.

Unter Fleisch versteht man sowohl Fleisch von Vieh als auch von Geflügel.Bevorzugt ist ein Mousse aus Schinken oder Leber.Unter Leber versteht man sowohl Leber von Gänsen, Enten, Kalb oder Schwein.

Da das erfindungsgemässe Mousse pasteurisiert ist, sind Sporenbildner nicht vollständig getötet, so dass der pH-Wert des Mousses auf zwischen 5 bis 6 eingestellt sein muss.Diese Einstellung geschieht durch Zugabe von Säure wie Zitronensäure oder Milchsäure.

Der aw-Wert wird definiert als das Vehältnis des Wasserdampfdruckes über dem Lebensmittel (p) zum Wasserdampfdruck des reinen Wassers (po) bei gleicher Temperatur. Reines Wasser hat einen aw-Wert von 1,0. Jeder Zusatz einer wasserbindenden Substanz bewirkt, dass $p < po$ und damit der aw-Wert$<1$ wird. Der optimale aw-Wert der meisten Mikroorganismen liegt bei aw $> 0,98$. Beim Absenken des aw-Wertes werden Mikroorganismen immer stärker in ihrem Wachstum gehemmt. Die Bestimmung des aw-Wertes basiert auf dem Prinzip der Gefrierpunktserniedrigung.

Der Gehalt an trockener Substanz liegt zwischen 35 und 50% : Diese Menge ist kritisch aus mikrobiologischen und Textur-Gründen.

Der Gehalt an Stickstoff (auf Volumen bezogen) liegt zwischen 20 und 43 % damit beim Verzehr ein Gefühl eines leichten, schaumigen Produktes entsteht.

Die Bestimmung des Stickstoffgehaltes wird wie folgt durchgeführt:

- Bestimmung des Volumens des Fertigproduktes (V1)

- Zerstörung der Moussestruktur, z.B. durch Erwärmen (ca. 40°C) und Rühren,

- Bestimmung des verbliebenen Volumens (ohne Gas) (V2),

- Berechnung des Gasgehaltes:

$$\frac{V1 - V2}{V1} \cdot 100$$

Das Mousse besteht aus 20 bis 50 % Fleisch, 15 bis 35 % Fett, zwischen 7 und 15% Eiweiss und Wasser. Das Mousse kann zusätzlich Aromen, Verdickungsmittel, Glutamat, Aufschlagstabilisatoren und weitere Komponenten enthalten.

Dieses Mousse ist mindestens 5 Wochen im Kühlschrank bei ca. 8°C haltbar und ist gut streichfähig, weil die Proteine kein vernetztes Koagulat bilden.

Unter Fett versteht man sowohl tierisches als auch pflanzliches-Fett, wie zum Beispiel aus Fleisch bzw. Kokosnuss und flüssiges Fett wie Oel, zum Beispiel aus Soja. Unter Eiweiss versteht man die Proteine, die im wesentlichen im Fleisch oder Fisch enthalten sind.

Die Erfindung betrifft weiter das Verfahren zur Herstellung des obenerwähnten Mousses, indem man das Fleisch zerkleinert und erhitzt, alle weitere Komponenten zugibt und mischt, die erhaltene Mischung pasteurisiert, homogenisiert, kühlt, mit Stickstoff oder Luft aufschäumt und anschliessend abfüllt.

Die Zerkleinerung geschieht normalerweise in einem klassischen Kutter, der mit einer Doppelmantelheizung ausgerüstet ist. Um ein mikrobiologisches Wachstum zu vermeiden, fügt man Nitritpökelsalz (NaCl + NaO$_2$) hinzu in einer Menge von ca 1 Gewichts %.

Dieses vorbereitete Fleisch kann dann mit grob zerschnittener Leber und Säure gemischt werden,um den pH-Wert zwischen 5 und 6 einzustellen,so dass ein Wachstum von toxischen Sporenbildern vermieden wird. Wasser kann auch zu Beginn hinzugefügt werden. Die Zugabe von Wasser liegt zwischen 20 und 25 %.

Die erhaltene Mischung wird dann nochmals zerkleinert und schliesslich unter ständigem Rühren erhitzt,zum Beispiel über eine Doppelmantelheizung oder Dampfinjektion. Diese Erhitzung findet zwischen 80 und 100°C statt und dauert ca. 2 bis 5 min.Der Grund dieser thermischen Behandlung ist, die Fleischbindung möglichst vollständig zu zerstören, um ein streichfähiges Produkt herstellen zu können.Diese thermische Behandlung muss vor Zugabe aller weiteren Zusätze der Mousse stattfinden.

Nach diesem Erhitzungsschritt werden alle übrigen Rezepturbestandteile zugesetzt,nämlich das Fett, die Aromen, die Verdickungsmittel, Glutamat, die Aufschlagsstabilisatoren Gewürze, Salz und andere.Zur guten Vermischung wird das ganze System nochmals gerührt.

Das Produkt wird dann auf 90 bis 95 °C temperiert und während 4 bis 6 min auf diese Temperatur gehalten.Diese thermische Behandlung dient zur Inaktivierung von vegetativen Keimen. Die Erhitzung des Produkts geschieht normalerweise über einen Wärmetauscher. Um den pH einzustellen, wird Säure vor der Pasteurisation hinzugefügt.

Die Fleischmasse wird dann abgekühlt und bei ca. 50 °C homogenisiert.Diese Behandlung ist notwendig, weil die Pasteurisation die Emulsion gebrochen hat. Das homogenisierte Produkt muss dann auf eine Temperatur zwischen 10 und 18 °C gekühlt werden,damit die Aufschäumung überhaupt hält.

Das Produkt wird dann in die Schäummaschine eingebracht,wo es mit sterilem Stickstoff oder Luft aufgeschäumt wird, um eine Volumenzunahme zwischen 25 und 75% zu erreichen.

Die Abfüllung wird mit dem aufgeschäumten Produkt bei einer Temperatur von ca. 15°C durchgeführt, um eine glatte Oberfläche zu erhalten.

Die zur Abfüllung verwendeten Becher sind sterilisiert. Die Abfüllmaschine arbeitet entweder unter ultrahygienischen oder aseptischen Bedingungen.

Zum Aussteifen wird das Fleischmousse kühl gelagert.

Die zur Durchführung des erfindungsgemässen Verfahrens verwendete Anlage muss, unmittelbar bevor das Produkt eingefahren wird, mit Heissdampf bzw. Wasser sterilisiert und nach Produktionsabschluss gereinigt werden.

Das Verfahren kann voll kontinuierlich,aber auch diskontinuierlich geschehen, wobei in diesem Fall Zwischenlagertanks vorgesehen sein müssen.

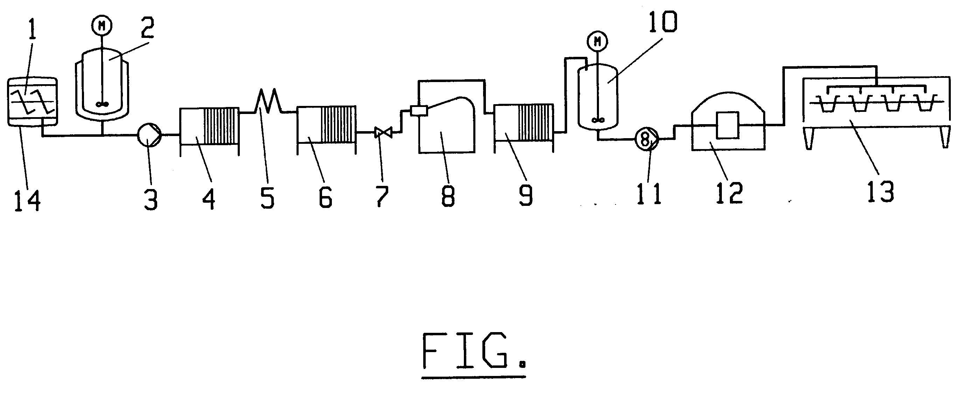

Die Beschreibung wird jetzt anhand der beiliegenden Figur näher erläutert,die eine schematische Darstellung des Verfahrens und der Anlage zeigt.

Fleisch, eventuell vorzerkleinert, wird im Kutter (1) feiner zerkleinert. Dieser Kutter besitzt eine Doppelmantelheizung (14), wobei eine thermische Behandlung des Fleisches durchgeführt wird. Nach dieser thermischen Behandlung werden die weiteren Komponenten der Zusammensetung hingzugefügt und im Kutter (1) zusammengemischt. Von einem Zwischenlagertank (2) wird die Fleischmischung durch die Pumpe (3) in die Pasteurisationsstrecke gefördert. Diese besteht aus mehreren Wärmetauschern (4, 5, 6) und einem Halteventil (7). Der Wärmetauscher (4) erlaubt eine Erhitzung auf 95°C und der Tauscher (5) dient zur Temperaturhaltung während 5 Min. Mit Tauscher (6) wird die Fleischmischung auf 50°C abgekühlt.

Im Homogenisator (8) wird die Mischung bei 50-100 bar homogenisiert und auf dem nachgeschalteten Wärmetauscher (9) auf 10 °C gekühlt.Vom Zwischenlagertank (10) wird die Fleischmousse mittels Pumpe (11) in die Schäummaschine (12) gefördert. Nach Zunahme des Volumens von 40 bis 45 % wird die erhaltene Mousse der ultrahygienischen Abfüllmaschine (13) zugeführt, wo sie dann in Becher dosiert wird.

Die Erfindung wird jetzt anhand des folgenden Beispiels erläutert.

### Beispiel

Man bereitet ein Fleischmousse mit 35 % Vorderschinken und 24 % Wasser. Diese Mischung wird zerkleinert und 0,20 % Säure (Milch- und Zitronensäure) wird zugegeben.Man führt dann eine feine Zerkleinerung durch,sowie eine thermische Behandlung auf 90°C.

Man fügt dann folgende Komponenten hinzu :

13 % Kokoshartfett, 5 % Sojaöl, 15 % Sahne, 1 % Sorbit sowie Salz, Pfeffer, und verschiedene Aromen und Gewürze. Die Fleischmischung wird dann während 5 min auf 95 °C pasteurisiert, auf 50 °C gekühlt,homogenisiert und auf 10 °C gekühlt.

Der Aufschlag geschieht unter einem Stickstoffdruck von 6,6 bar und das Aufschlagsystem arbeitet bei einem Druck von 2,4 bar.Man erzielt auf diese Weise eine Volumenzunahme von 42 %.Die Abfüllung wird bei einer Produkttemperatur von 15 °C auf einer Abfüllmaschine durchgeführt.

Die Mousse ist 5 Wochen bei 8°C haltbar ohne wesentliche Farbe-,Textur-, Geschmack- und Geruchsänderung.

Es ist auch möglich weitere Moussen herzustellen,zum Beispiel mit 11 % Schweineleber und 20 % Schweinefleisch oder 14 % Schweineleber,l7 % Schweinefleisch und 3 % Entenleber.

### Patentansprüche

1. Gekühltes, pasteurisiertes, streichfähiges Fleisch- und Fischmousse das - auf Volumen bezogen - zwischen 20 und 43% Stickstoff oder Luft enthält, dadurch gekennzeichnet das es einen pH-Wert zwischen 5 und 6, einen aw-Wert zwischen 0,960 und 0,980 und einen TS-Wert zwischen 35 und 50% aufweist.

2. Gekühltes, pasteurisiertes Mousse gemäss Anspruch 1, dadurch gekennzeichnet, dass es einen pH-Wert zwischen 5,4 und 5,7 und einen TS-Wert zwischen 40 und 45% aufweist.

3. Gekühltes, pasteurisiertes, streichfähiges Mousse gemäss Anspruch 1 oder 2, dadurch gekennzeichnet, dass es zwischen 20 und 50% Fleisch, zwischen 15 und 35% Fett, zwischen 7 und 15% Eiweiß und Wasser enthält.

4. Verfahren zur Herstellung eines gekühlten, pasteurisierten, streichfähigen Fleischmousses wobei man das Fleisch zerkleinert und erhitzt, alle weiteren Komponenten zugibt und mischt, die erhaltene Mischung pasteurisiert, homogenisiert, kühlt, mit Stickstoff oder Luft aufschäumt und anschließend abfüllt, so daß das Fleischmousse einen pH-Wert zwischen 5 und 6, einen aw-Wert zwischen 0,960 und 0,980, einen TS-Wert zwischen 35 und 50% aufweist und zwischen 20 und 43% Stickstoff oder Luft enthält.

5. Verfahren gemäß Anspruch 4, dadurch gekennzeichnet dass die Erhitzung bei einer Temperatur zwischen 80 und 100°C stattfindet.

6. Verfahren gemäß Ansprüche 4 oder 5, dadurch gekennzeichnet dass die Pasteurisation bei einer Temperatur von 90 bis 95°C während 4 bis 6 Min durchgeführt wird.

7. Verfahren gemäß Ansprüche 4 bis 6, dadurch gekennzeichnet dass die Kühlung der Mischung zwischen 10 und 18°C geschieht.

8. Verfahren gemäß Ansprüche 4 bis 7, dadurch gekennzeichnet, dass man mit Stickstoff oder Luft aufschäumt um eine Volumenzunahme von zwischen 25 und 75% zu erreichen.

9. Verfahren gemäß Ansprüche 4 bis 8, dadurch gekennzeichnet, dass man vor der Pasteurisation Säure zugibt.

## Claims

1. Refrigerated, pasteurised, spreadable meat and fish mousse which contains between 20 and 43% by volume nitrogen or air, characterised in that it has a pH-value of between 5 and 6, an aw-value of between 0.960 and 0.980 and a TS-value of between 35 and 50%.

2. Refrigerated, pasteurised mousse according to claim 1, characterised in that it has a pH-value of between 5.4 and 5.7 and a TS-value of between 40 and 45%.

3. Refrigerated, pasteurised, spreadable mousse according to claim 1 or 2, characterised in that it contains between 20 and 50% meat, between 15 and 35% fat, and between 7 and 15% albumen and water.

4. Method of manufacturing a refrigerated, pasteurised, spreadable meat mousse, wherein the meat is minced and heated, all the other ingredients are added and mixed in, the mixture obtained is pasteurised, homogenised, refrigerated, foamed with nitrogen or air and then put into a container, so that the meat mousse has a pH-value of between 5 and 6, an aw-value of between 0.960 and 0.980 and a TS-value of between 35 and 50%, and contains between 20 and 43% nitrogen or air.

5. Method according to claim 4, characterised in that the heating takes place at a temperature of between 80 and 100°C.

6. Method according to claims 4 or 5, characterised in that pasteurisation is carried out at a temperature of 90 to 95°C for 4 to 6 minutes.

7. Method according to claims 4 to 6, characterised in that refrigeration of the mixture takes place between 10 and 18°C.

8. Method according to claims 4 to 7, characterised in that the mousse is foamed with nitrogen or air in order to achieve a volume increase of between 25 and 75%.

9. Method according to claims 4 to 8, characterised in that acid is added before pasteurisation.

## Revendications

1. Mousse de viande et de poisson réfrigérée, pasteurisée et tartinable qui contient - sur base volumique - entre 20 et 43 % d'azote ou d'air, caractérisée en ce qu'elle présente une valeur de pH comprise entre 5 et 6, un indice aw compris entre 0,960 et 0,980 et un taux de substance sèche compris entre 35 et 50 %.

2. Mousse réfrigérée pasteurisée suivant la revendication 1, caractérisée en ce qu'elle présente une valeur de pH comprise entre 5,4 et 5,7 et un taux de substance sèche compris entre 40 et 45 %.

3. Mousse réfrigérée pasteurisée et tartinable suivant la revendication 1 ou 2, caractérisée en ce qu'elle contient entre 20 et 50 % de viande, entre 15 et 35 % de matière grasse, entre 7 et 15 % d'albumine et de l'eau.

4. Procédé de fabrication d'une mousse réfrigérée pasteurisée et tartinable dans lequel on divise la viande et on la chauffe, on ajoute tous les autres composants et on malaxe, on pasteurise le mélange obtenu, on l'homogénéise, on le refroidit, on le fait foisonner avec de l'azote ou de l'air, puis on le remplit , de telle sorte que la mousse de viande présente une valeur de pH comprise entre 5 et 6, un indice aw compris entre 0,960 et 0,980 et un taux de substance sèche compris entre 35 et 50 % et contient entre 20 et 43 % d'azote ou d'air.

5. Procédé suivant la revendication 4, caractérisé en ce que le chauffage a lieu à une température comprise entre 80 et 100°C.

6. Procédé suivant la revendication 4 ou 5, caractérisé en ce que la pasteurisation est effectuée à une température de 90 à 95°C pendant 4 à 6 minutes.

7. Procédé suivant les revendications 4 à 6, caractérisé en ce que le refroidissement du mélange s'effectue entre 10 et 18°C.

8. Procédé suivant les revendications 4 à 7, caractérisé en ce qu'on conduit le foisonnement avec de l'azote ou de l'air pour atteindre une augmentation de volume comprise entre 25 et 75 %.

9. Procédé suivant les revendications 4 à 8, caractérisé en ce qu'on ajoute un acide avant la pasteurisation.

# FIG.

EP 0 590 172 B1